# FASCICULE DE BREVET EUROPEEN

(11) **EP 1 896 364 B1**
(45) Date de publication et mention de la délivrance du brevet: **22.12.2010**
(21) Numéro de dépôt: 06763882.5
(22) Date de dépôt: 26.06.2006
(51) Int. Cl.: C01F 11/02, C04B 2/06, B01J 20/04, B01D 53/50, B01D 53/68

(54) **COMPOSITION DE CHAUX PULVERULENTE, SON PROCEDE DE FABRICATION ET SON UTILISATION**
PULVERFÖRMIGE KALKZUSAMMENSETZUNG, HERSTELLUNGSVERFAHREN DAFÜR UND VERWENDUNG DAVON
PULVERULENT LIME COMPOSITION, METHOD FOR THE PRODUCTION THEREOF, AND USE OF THE SAME

(30) Priorité: 28.06.2005 BE 200500328
(43) Date de publication de la demande: 12.03.2008
(73) Titulaire: S.A. LHOIST RECHERCHE ET DEVELOPPEMENT, 1342 Ottignies-Louvain-La-Neuve (BE)
(72) Inventeur: LAUDET, Alain, B-5000 Namur (BE); GAMBIN, Amandine, F-70270 Ternuay (FR)
(74) Mandataire: Claeys, Pierre
(86) Numéro de dépôt international: PCT/EP2006/063542
(87) Numéro de publication internationale: WO 2007/000433

(56) Documents cités:
- EP-A- 0 327 902
- EP-A- 0 367 148
- EP-A- 0 795 350
- WO-A-88/09203
- WO-A-92/01627
- WO-A-92/09528
- WO-A-97/14650
- DE-A1- 3 826 971
- US-A- 4 526 703

## Description

La présente invention se rapporte à une composition de chaux hydratée pulvérulente, à son procédé de fabrication et à une utilisation de la composition de chaux pulvérulente pour l'abattement des composés soufrés et halogénés des gaz de fumées.

On entend par chaux hydratée, également appelée chaux éteinte, pulvérulente, un ensemble de particules solides, principalement constituées d'hydroxyde de calcium Ca(OH)₂.

Cette chaux éteinte peut évidemment contenir des impuretés, telles que l'oxyde ou l'hydroxyde de magnésium, la silice, l'alumine, etc., à hauteur de quelques dizaines de grammes par kilo. D'une manière générale, la taille des particules de cette matière pulvérulente est intégralement inférieure à 1 mm et souvent intérieure à 250 µm. La chaux éteinte peut contenir de l'eau libre, à savoir non liée chimiquement au composé, jusqu'à environ 50 g/kg.

La chaux éteinte pulvérulentes est utilisée dans de nombreuses applications, en particulier comme neutralisant de composés acides (HCl, SO₂, HF, SO₃...) présents dans les gaz de fumées. Dans ce procédé par "voie sèche", simple et peu coûteux, la chaux pulvérulente, utilisée comme absorbant, est directement mise en contact avec les gaz à épurer. Cependant, la réaction de neutralisation entre gaz et matière solide n'est pas aisée et un excès important de réactif calcique est souvent nécessaire par rapport à la quantité d'acide à neutralise, afin de respecter les normes d'émission de plus en plus contraignantes. Cet excès de réactif pose surtout le problème de la génération supplémentaire de sous-produits ou résidus, à traiter en aval.

Afin de réduire l'excès de réactif ou absorbant à mettre en oeuvre, de nombreux produits à base de chaux éteinte pulvérulente ont été développés, de façon à obtenir une meilleure aptitude à -capter des gaz acides par voie sèche encore appelé "procédé sec".

En particulier, il est -connu de favoriser la captation d'HCl gazeux par des chaux éteintes classiques, en combinant ces dernières à un additif, tel que les hydroxydes ou carbonates alcalins ou des chlorures alcalins [CHEN, D. et coll., International Academic Publishers, 1999, pp. 337-342]. Dans ce document, l'additif en question est ajouté à l'eau d'extinction de la chaux vive lors de la préparation de la chaux hydratée. Les auteurs observent une amélioration des performances d'abattement d'HCl gazeux de la chaux éteinte ainsi obtenue, par rapport à l'absence d'additif, à des températures de mise en oeuvre supérieures à 200°C. Par contre, aucun effet sur l'abattement de SO₂ n'est évoqué.

D'autres travaux, tels que présentés dans le brevet US 4 604 269, préconisent l'ajout, à l'eau d'extinction de la chaux vive, d'additifs tels que l'hydroxyde de sodium (NaOH) à hauteur de 5% à 10% en poids, par rapport à la chaux vive, ou encore de chlorures, tels que le chlorure de calcium (CaCl₂). La chaux éteinte, ainsi obtenue, favorise la désulfuration des fumées à "basse" température, à savoir moins de 230°C, et de préférence moins de 175°C. En effet, l'action de l'additif se révèle lorsque la température de mise en oeuvre de l'absorbant diffère du point de rosée de moins de 25°C, de préférence moins de 10°C. Dans ces conditions, l'additif a pour résultat de rendre l'absorbant déliquescent en présence d'humidité, ce qui favorise la présence d'un film liquide à l'interface solide-gaz et améliore la captation de SO₂.

Le document WO 88/09203 reprend ce concept d'ajout d'un composé alcalin, comme le NaOH ou de chlorures tels le CaCl₂, à l'eau d'extinction de la chaux vive. Les quantités et l'effet de ces additifs ne sont pas vraiment commentés. Le premier aurait le rôle d'accroître la basicité de l'absorbant, le second de retenir l'eau, comme dans le cas du brevet US 4 604 269 mentionné ci-dessus.

Le document [Method for producing reactive Coolside sorbent -Production of reactive sorbent for cool-size process - by hydrating quicklime with water containing sodium chloride aqueous solution, Research Disclosure, 1988, 295(898), No. 29564, ISSN : 03744353], confirme l'influence positive pour la désulfuration dans des conditions proches de la saturation (de préférence moins de 20°C au dessus du point de rosée) d'additifs comme NaCO₃, NaOH, CaCl₂ et surtout NaCl, présent à plus de 5% en poids de l'absorbant, par ajout à l'eau d'extinction. Cependant, la chaux éteinte ainsi modifiée présente une surface spécifique BET inférieure à celle de la chaux hydratée classique, obtenue en l'absence d'additif. Dans les conditions de mise en oeuvre étudiées, l'utilisation d'additifs organiques, tels les sucres et tensioactifs, n'améliore pas la désulfuration des chaux éteintes.

On a prévu ici de qualifier de "*première génération*" les absorbants de l'art antérieur à base de chaux éteinte, dont l'aptitude à capter des gaz acides a été améliorée par rapport à une chaux éteinte "classique" ou "standard", par ajout d'un *additif* du type de ceux précités, c'est-à-dire une modification par voie "*chimique*".

Il existe une autre classe d'absorbants à base de chaux éteinte, dont l'aptitude à capter des gaz acides est supérieure à celle d'une chaux hydratée classique. L'avantage de ces absorbants provient alors d'une modification des propriétés *physiques,* en l'occurrence la *texture,* à savoir une surface spécifique BET plus élevée et/ou un volume poreux BJH plus élevé. On qualifiera ces absorbants de "seconde *génération*"*,* issu d'une modification par voie "*physique*"*,* voir [OATES, J.A.H., Lime and limestone, Weinheim : Wiley-VCH, 1998, 455, pp.219-221].

On connaît, par exemple du document WO97/14650, une composition de chaux pulvérulente comprenant des particules d'hydroxyde de calcium présentant une surface spécifique BET supérieure à 25 m²/g et un volume poreux total BJH de désorption à l'azote d'au moins 0,1 cm³/g.

Ce document décrit en particulier un produit à base de chaux hydratée, dont le volume poreux BJH et la surface spécifique BET sont nettement plus développés que ceux d'un hydroxyde de calcium standard. L'aptitude à capter des gaz acides d'une telle chaux hydratée est clairement améliorée par rapport à une chaux hydratée classique mais aussi par rapport à une chaux éteinte de première génération. La chaux hydratée de seconde génération selon la demande de brevet internationale WO97/14650 est considérée actuellement comme le réactif calcique le plus performant pour la captation de gaz acides par voie sèche, dans une large gamme de conditions opératoires.

Toutefois, cette chaux de seconde génération ne présente pas un accroissement de la performance de captation susdite aussi important pour tous les gaz acides potentiellement présents dans les gaz de fumées. En particulier, le gain de performance de ces absorbants de seconde génération pour l'abattement de composés soufrés tels que SO₂ n'est pas aussi élevé que celui relatif à l'abattement de HCl.

L'invention a pour but de pallier les inconvénients de l'état de la technique en procurant une composition de chaux hydratée pulvérulente qui présente, outre des propriétés excellentes de captation de HCl, une meilleure aptitude à la captation de composés soufrés, que les absorbants de seconde génération.

Pour résoudre ce problème, il est prévu suivant l'invention, une composition de chaux pulvérulente comprenant des particules d'hydroxyde de calcium, présentant une surface spécifique BET égale ou supérieure à 25 m²/g et un volume poreux total BJH de désorption à l'azote égal ou supérieur à 0,1 cm³/g, cette composition comprenant en outre une teneur en métal alcalin égale ou supérieure à 0,2% et égale ou inférieure à 3,5 % sur la base du poids total de la composition.

Par la présence, dans la composition pulvérulente à base de chaux éteinte, d'un métal alcalin, celle-ci présente une meilleure performance de captation de SO₂ que les absorbants connus de seconde génération. En outre, cette composition pulvérulente garde ses excellentes propriétés telles qu'une surface spécifique BET et un volume poreux BJH tous deux élevés, en particulier tous deux supérieurs à ces mêmes propriétés pour une chaux hydratée classique, ce qui signifie que son aptitude de captation des composés acides tels que l'HCl n'est pas altérée. La présence du métal alcalin a pour résultat une chaux pulvérulente à base de chaux éteinte à texture modifiée, qui présente une quantité en métal alcalin, de préférence comprise entre 2 et 35 g/kg sur la base du poids total de la composition.

Avantageusement, la teneur en humidité résiduelle est égale ou inférieure à 3% en poids, de préférence à 2,5% et en particulier à 2%.

De façon étonnante, si on utilise un métal alcalino-terreux et non alcalin en quantité inférieure ou égale à 3,5 %, aucun avantage significatif n'apparaît par rapport à un produit de seconde génération en terme de taux d'abattement de SO₂ (avec Mg(OH)₂ et MgSO₄), voire même une dégradation se manifeste (avec CaCl₂). De même, si la teneur en métal alcalin dépasse 3,5%, les performances ne sont plus supérieures à celles d'un produit de seconde génération.

De manière particulièrement avantageuse, le métal alcalin provient d'un composé alcalin choisi dans le groupe constitué des hydroxydes, des carbonates, de hydrogénocarbonates, des nitrates, des phosphates, des persulfates, des monocarboxylates, tels que des acétates de métal alcalin, et de leurs mélanges, en particulier ceux de sodium, de potassium et/ou de lithium.

Ces composés alcalins permettent d'augmenter la performance d'abattement de composés soufrés tout en préservant de manière inattendue le gain de performance issu de l'amélioration physique de la texture du produit selon l'art antérieur.

De préférence, la composition peut présente une teneur en CO₂ égale ou inférieure à 5% en poids, avantageusement à 3%.

Dans certaines formes de réalisation, les particules d'hydroxyde de calcium se présentent sous la forme d'un mélange comprenant une première fraction de particules d'une granulométrie inférieure à 32 µm et une deuxième fraction de particules d'une granulométrie supérieure à 32 µm, le pourcentage en poids de refus à 32 µm étant compris entre 10 et 50.

Avec une telle répartition granulométrique, la composition selon l'invention présente une excellente fluidité et des facilités de dosage (précis et facile) qui améliorent l'efficacité de traitement, en particulier le traitement des gaz de fumées.

En outre, dans certains cas, le refus granulométrique à 32 µm peut être compris entre 20 et 40 %.

Selon l'invention, la surface spécifique BET est égale ou supérieure à 25 m²/g; ceci signifie que toutes les valeurs, y compris 25 m²/g, par exemple, les valeurs supérieurs à 30 m²/g, à 35 m²/g, voire jusque 45 ou 50 m²/g sont des valeurs de surface spécifique BET comprises dans la portée de l'invention.

De même, le volume poreux total BJH de désorption est égal ou supérieur à 0,1 cm³/g; ceci signifie que toutes les valeurs, y compris 0,1 cm³/g, par exemple, les valeurs supérieures à 0,15 cm³/g, à 0,17 cm³/g, 0,19 cm³/g et même au-delà de 0,20 cm³/g sont des valeurs de volume poreux total BJH de désorption à l'azote qui sont comprises dans la portée de l'invention.

D'autres formes de réalisation de la composition suivant l'invention sont indiquées dans les revendications annexées.

La composition pulvérulente selon l'invention peut être préparée suivant un procédé comprenant
- une extinction de particules de CaO de granulométrie égale ou inférieure à 10 mm au moyen d'une quantité d'eau d'extinction suffisante pour obtenir un hydroxyde de calcium présentant une humidité résiduelle entre 15 et 35 % en poids, et
- un séchage dudit hydroxyde de calcium avec obtention d'une composition de chaux pulvérulente.

Ce procédé comprend en outre, avant, pendant ou après l'extinction, une addition d'une quantité d'un composé alcalin aux particules de CaO, à l'eau d'extinction et/ou respectivement à l'hydroxyde de calcium, cette quantité étant suffisante pour obtenir, dans ladite composition de chaux pulvérulente, une teneur en métal alcalin égale ou supérieur à 0,2% et égale ou inférieure à 3,5 % en poids sur la base du poids total de la composition.

Ce procédé permet l'obtention d'un absorbant de seconde génération, suivant un procédé analogue à celui décrit dans le document WO97/14650, à savoir notamment l'extinction d'une chaux vive en présence d'un excès notable d'eau, suivi d'un séchage de l'eau excédentaire, mais, en outre, il est prévu d'ajouter un composé alcalin. De cette façon, on obtient une chaux pulvérulente à base de chaux éteinte à texture modifiée, qui contient un métal alcalin. La chaux pulvérulente selon l'invention présente une performance de captation améliorée vis-à-vis des composés soufrés, tout en gardant de manière remarquable ses performances vis-à-vis des composés acides de type HCl. D'une manière inattendue, il est apparu que cette chaux présentait également une bonne aptitude de captation de HBr et HF.

Avantageusement, le séchage a lieu au moyen d'un gaz présentant une température comprise entre 100 et 550°C, avec un abaissement de l'humidité résiduelle à une valeur égale ou inférieure à 3% en poids.

L'additif alcalin peut avantageusement être ajouté à l'eau d'extinction. Cette addition à l'eau d'extinction peut être préalable à l'extinction ou simultanée à celle-ci.

On peut aussi imaginer de mélanger à sec l'additif alcalin aux particules d'oxyde de calcium, avant l'extinction. On peut aussi prévoir notamment de le mélanger avec l'hydroxyde de calcium obtenu après extinction. L'additif peut aussi être ajouté à plusieurs moments différents du processus.

Dans une forme de réalisation avantageuse, le métal alcalin est, de préférence, du sodium, du potassium et/ou du lithium.

D'une manière particulièrement préférentielle, le -composé alcalin est choisi parmi le groupe constitué des hydroxydes, des carbonates, des hydrogénocarbonates, des nitrates, des phosphates, des persulfates ou encore des sels d'un mono-acide carboxylique, tels que les acétates ou les formiates, de métal alcalin, ou leur mélange.

Avantageusement, le procédé selon l'invention -comprend en outre, après l'extinction, un broyage d'au moins une partie dudit hydroxyde de calcium, le broyage ayant lieu après le séchage et/ou au cours de celui-ci.

La composition selon l'invention peut également être obtenue au moyen d'un procédé comprenant
- un mélange de CaO et/ou Ca(OH)₂ avec une quantité d'eau suffisante pour obtenir un lait de chaux présentant une teneur en matière solide de 10 à 50% en poids,
- une séparation d'eau à partir dudit lait de chaux,
- un séchage dudit lait de chaux ainsi séparé d'eau avec obtention d'une composition de chaux pulvérulente, et
- avant, pendant ou après le mélange, une addition d'une quantité d'un composé alcalin au CaO et/ou Ca(OH)₂, à l'eau de mélange et/ou respectivement au lait de chaux, cette quantité étant suffisante pour d'obtenir, dans ladite composition de chaux pulvérulente, une teneur en métal alcalin égale ou supérieur à 0,2% et égale ou inférieure à 3,5% en poids sur la base du poids total de la composition.

Dans certains modes de réalisation, le procédé peut avantageusement comprendre une étape de broyage, d'émottage ou de désagglomération du mélange ou de la composition à base de chaux. Selon le cas, l'étape de séparation d'eau (déshydratation) est effectuée notamment par évaporation, par filtration ou par une combinaison des deux.

D'autres modes de réalisation du procédé suivant l'invention sont indiqués dans les revendications annexées.

L'invention a également pour objet une utilisation d'une composition de chaux pulvérulente suivant l'invention pour une épuration des gaz de fumées, en particulier pour un abattement des composés soufrés et halogénés de ces gaz de fumées. Les composés soufrés et halogénés des gaz de fumées visés par l'abattement susdit sont notamment le SO₂, le SO₃ et le HCl, le HF et le HBr.

D'autres caractéristiques, détails et avantages de l'invention ressortiront de la description donnée ci-après, à titre non limitatif et en faisant référence aux dessins annexés.
La figure 1 est une illustration schématique d'une installation pilote de fabrication des lots d'essai d'absorbants.
La figure 2 est une illustration schématique du dispositif de test des absorbants.

Sur les figures, les éléments identiques ou analogues portent les mêmes références.

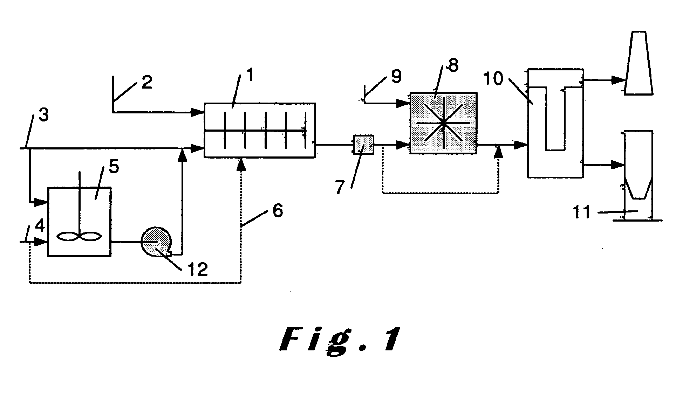

Afin de comparer valablement les compositions selon l'invention aux absorbants de l'art antérieur, des lots de ces différents absorbants ont été fabriqués sur une même installation pilote, avec des conditions opératoires et des matières premières de base (eau et chaux vive) similaires. Cette installation pilote de préparation de chaux hydratée est schématisée à la figure 1.

Le dispositif illustré à la figure 1 comprend une unité d'extinction, encore appelée un hydrateur, mono-étage 1. Cet hydrateur mono-étage 1 est alimenté en chaux vive broyée via une alimentation 2, à raison de 100 kg/h, et en eau via une alimentation 3. Dans les cas où la fabrication de l'absorbant recourt à un additif, celui-ci est alimenté via une alimentation 4, et il est mis en solution dans un réservoir 5, duquel il est pompé au moyen d'une pompe 12 et ajouté à l'alimentation en eau d'extinction 3 avant l'entrée dans l'hydrateur 1.

D'une manière alternative, lorsque c'est nécessaire, l'additif peut également être ajouté directement dans l'hydrateur 1 au moyen d'une alimentation 6.

A la sortie de l'hydrateur, le taux d'humidité (eau libre) du produit est mesuré en continu par un appareil infrarouge 7. Si cette humidité est supérieure à 20 g/kg, le produit est -conduit dans un broyeur/sécheur 8, alimenté en air chaud via l'alimentation 9, qui permet de désagglomérer et de sécher le produit, de façon à avoir une humidité résiduelle ne dépassant pas 10 g/kg. Le produit fini est alors séparé du courant d'air de séchage dans un filtre à manches 10, puis dirigé vers un silo de stockage 11.

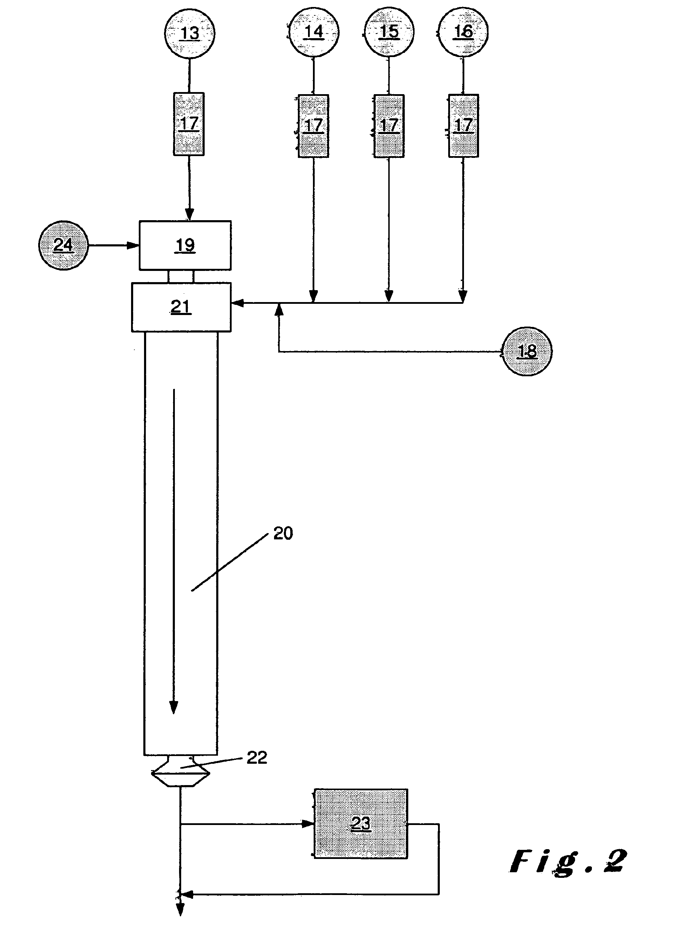

Afin de comparer les performances respectives des différents absorbants fabriqués dans l'installation pilote précitée, il est apparu nécessaire de mettre au point un moyen de tester les absorbants de manière appropriée pour l'abattement des gaz acides. Dès lors, on injecte à co-courant, dans un dispositif illustré à la figure 2, à une température déterminée, un débit connu d'absorbant pulvérulent dans un courant de gaz synthétique, dont la composition initiale en acide et le débit sont contrôlés. Ce dispositif de test des absorbants s'approche autant que possible des conditions de mise en oeuvre à l'échelle industrielle. Il est discriminant pour classer *en relatif* les différents absorbants, en fonction de leur performances respectives.

Comme on peut le voir à la figure 2, le dispositif de test des absorbants comprend quatre lignes d'alimentation en gaz 13, 14, 15, et 16, dont les flux sont contrôlés par des régulateurs 17 de débit massique : la première ligne 13 véhicule un mélange de SO₂ à 1% molaire dans l'azote, la deuxième ligne 14, un mélange de HCl 5% dans l'azote, la troisième ligne 15, un mélange CO₂ à 15% dans l'azote et la dernière 16 transporte de l'azote. Une alimentation en vapeur d'eau surchauffée 18 permet également d'ajuster l'humidité du courant gazeux. Les concentrations en gaz acides sont fixées sur la base des débits respectifs d'azote et de gaz acides. L'absorbant est injecté en tête de réacteur au moyen d'un doseur de poudre 19, alimenté par une fraction du courant d'azote en 24.

Le réacteur tubulaire 20, d'une longueur approximative de 3 m et d'un diamètre intérieur de 4 cm, permet d'atteindre des temps de contact gaz/solide de l'ordre de quelques secondes. Il est surmonté d'une bobinie 21 de chauffage des gaz à la température de réaction. Le maintien de cette température sur toute la longueur du réacteur est assuré par des résistances chauffantes contrôlées par une régulation de température.

En sortie de réacteur, les produits de réaction sont collectés sur un filtre en verre 22 et les concentrations en HCl, SO₂ et CO₂ du courant gazeux mesurées en continu par un analyseur infrarouge 23.

En début d'expérience, la teneur en HCl ou SO₂ en amont est déterminée par l'analyseur infrarouge. Lorsque cette concentration mesurée est stable à ± 3% de la valeur de consigne, l'absorbant à tester est injecté dans le réacteur à un débit massique Q donné, ce qui correspond au temps zéro de l'expérience. L'injection d'absorbant est stoppée dès que la concentration en HCl ou SO₂ aval est stable à ± 2% de la valeur asymptotique, ce qui correspond au temps final de l'expérience.

Les performances de désulfuration et/ou de déchloruration des réactifs pour un débit Q sont déterminées par la mesure du taux d'abattement final en pour cent, soit l'écart entre la concentration en HCl ou SO₂ au temps zéro de l'expérience et la concentration en HCl ou SO₂ au temps final de l'expérience, rapporté à la concentration en HCl ou SO₂ au temps zéro de l'expérience.

On constate que, toute autre chose étant égale, un même débit d'absorbant de première génération permet d'atteindre des taux d'abattement de SO₂ plus élevés qu'une chaux éteinte classique. De même, les performances de désulfuration des absorbants de seconde génération sont toujours supérieures à celles des chaux hydratées de première génération. Néanmoins, les taux d'abattement de SO₂ obtenus restent parfois insuffisants pour atteindre les normes d'émission de plus en plus sévères, sauf à utiliser des quantités de réactifs prohibitives. En effet, l'utilisation de tout excès d'absorbant est non seulement -coûteuse en soi mais pose le problème du traitement consécutif de quantités plus élevées de sous-produits, après réaction de l'absorbant avec le gaz acide.

Dans les compositions suivant l'invention, l'additif alcalin est ajouté dans des proportions telles que la teneur en le métal alcalin composant l'additif est comprise entre 2 et 35 g/kg de la composition finale, en fonction du type de métal et le type d'additif considéré.

Ces compositions pulvérulentes selon l'invention permettent donc de combiner les impératifs de surface spécifique BET (>25 m²/g) et de volume poreux BJH (> 0,15 cm³/g) élévés, tout en bénéficiant d'un gain de performance d'abattement de SO₂, -conféré par le composé alcalin ajouté.

L'utilisation de compositions selon l'invention dans le dispositif de la figure 2 montre qu'il n'y a pas de dégradation significative des performances d'abattement de l'HCl voire même une amélioration de ces dernières, par rapport à une chaux éteinte de la seconde génération.

Les meilleures performances d'abattement de SO₂ des compositions selon l'invention permettent d'élargir le champ d'application du procédé par voie sèche, simple et peu coûteux, à l'épuration des fumées d'installations dont le taux de désulfuration était antérieurement impossible à réaliser par un tel procédé.

L'invention va maintenant être décrite plus en détail au moyen d'exemples non limitatifs.

### EXEMPLES

### Exemple 1

Une chaux éteinte de production industrielle est choisie comme composé pulvérulent de référence (chaux classique ou standard). Sa surface spécifique BET est de 18 m²/g et son volume poreux total BJH est de 0,08 cm³/g.

Comme dans tous les cas évoqués dans le présent document, la surface spécifique BET est déterminée par adsorption d'azote à 77 K, selon la méthode BET multipoint bien connue, au départ d'un échantillon préalablement dégazé sous vide, à l'aide d'un appareillage du type *Micromeritics ASAP 2010.* Le volume poreux total est déterminé sur le même appareillage, par désorption d'azote à 77 K, et interprété selon la méthode BJH (hypothèse d'une géométrie cylindrique des pores).

Par ailleurs, deux chaux éteintes de première génération sont fabriquées dans l'installation pilote de la figure 1, au départ d'une chaux vive analogue à celle servant à la production de la chaux éteinte de référence ci-dessus et selon le même procédé mais en présente d'un additif. Pour la première, l'additif est du NaOH, pour la seconde, du Na₂CO₃, ajoutés en quantité telle, que le produit fini contient environ 15 g d'additif par kg d'absorbant. La chaux additionnée de NaOH présente une surface spécifique BET de 10 m²/g et un volume poreux total BJH de 0,05 cm³/g; celle additionnée de Na₂CO₃ possède une surface spécifique de 9 m²/g et un volume poreux de 0,04 cm³/g.

Comme annoncé dans l'art intérieur préalablement cité [Method for producing (...) ISSN : 03744353], l'ajout des additifs conduit à une diminution de la surface spécifique des chaux éteintes de première génération, par rapport à la référence. Le présent exemple montre qu'une diminution du volume poreux s'ensuit également.

Les performancesde désulfuration des trois chaux éteintes de cet exemple sont comparées au moyen du dispositif de test des absorbants de la figure 2, dans les conditions opératoires suivantes :
composition du gaz à épurer:
SO₂:1500 mg/Nm³
Humidité : 10%, en vol.
CO₂ : 9%, en vol.
débit d'absorbant :Q
facteur stoechiométrique (SR) : 6,5

Le débit d'absorbant Q correspond au débit de chaux nécessaire à la neutralisation du débit de SO₂, si le rendement de la réaction était de 100% (équilibre stoechiométrique), multiplié par un facteur "stoechiométrique" (SR), tenant compte qu'une partie de l'absorbant injecté ne participe pas réellement à la réaction.

Les taux d'abattement de SO₂ avec les trois chaux précitées dans le dispositif de la figure 2 sont repris dans le tableau 1 ci-dessous, en fonction de la température du réacteur.

**Tableau 1: taux d'abattement de SO₂**

| *Température °C* | *Référence* | *Chaux + NaOH* | *Chaux + Na₂CO₃* |
|---|---|---|---|
| 150 | 29% | 31% | 33% |
| 200 | 29% | 33% | 34% |
| 240 | 30% | 36% | 35% |
| 350 | 42% | 49% | 54% |

Le tableau 1 montre que les absorbants de première génération ont une meilleure capacité de désulfuration que la chaux de référence, dans le dispositif de la figure 2.

### Exemple 2

Une chaux éteinte de seconde génération est fabriquée dans l'installation pilote de la figure 1, selon un procédé analogue à celui décrit dans le document WO97/14650, à savoir, l'extinction de la chaux vive en présence d'un excès d'eau important (humidité résiduelle avant séchage de 200 à 300 g/kg), suivi d'un séchage de l'excès d'eau du produit fini.

Par ailleurs, cinq chaux éteintes selon l'invention sont fabriquées dans la même installation, au départ d'une chaux vive analogue à celle servant à la production de la chaux éteinte de seconde génération ci-dessus et selon un procédé similaire mais en présence d'un additif. Les additifs sont respectivement le NaOH, le Na₂CO₃, le Na₃PO₄, le NaCOOH (formiate de sodium) et le NaNO₃, ajoutés en quantité telle que le produit fini contient environ 7g de sodium par kg d'absorbant.

Les performances de désulfuration des six chaux éteintes de l'exemple 2 sont évaluées de la même manière que dans l'exemple 1 et dans les même conditions opératoires, sauf que le facteur stoechiométrique est de 2,5 et la température est fixée à 220°C, température qui est considérée comme une des plus discriminantes.

Les surfaces spécifiques BET et volumes poreux totaux BJH des cinq chaux de l'exemple 2 ainsi que leur performance d'abattement de SO₂ dans le dispositif de la figure 2 dans les conditions précitées sont repris au tableau 2.

**Tableau 2 : Surface spécifique BET, volume poreux BJH et taux d'abattement de SO₂**

| *Absorbant* | *Surface spécifique BET [m²*/*g]* | *Volume poreux BJH [cm³*/*g]* | *Taux d'abattement SO₂* |
|---|---|---|---|
| Chaux 2^{de} génération selon WO97/14650 | 40 | 0,21 | 20% |
| Chaux selon l'invention additionnée de NaOH | 36 | 0,21 | 27% |
| Chaux selon l'invention additionnée de Na₂CO₃ | 38 | 0,20 | 29% |
| Chaux selon l'invention additionnée de Na₃PO₄ | 29 | 0,17 | 25% |
| Chaux selon l'invention additionnée de NaCOOH | 29 | 0,19 | 26% |
| Chaux selon l'invention additionnée de NaNO₃ | 30 | 0,17 | 25% |

Les résultats du tableau 2 montrent que la valeur de la surface spécifique et/ou du volume poreux des absorbants selon l'invention ne permettent pas à eux seuls de prédire la performance d'abattement de SO₂. En effet, avec des valeurs comparables de ces deux paramètres, les absorbants suivant l'invention présentent des taux d'abattement de SO₂ nettement à leur avantage.

De façon étonnante, bien que les conditions de préparation soient similaires et notamment les teneurs en sodium des cinq compositions pulvérulentes selon l'invention soient comparables (environ 7 g/kg), les valeurs de surface spécifique et de volume poreux mais aussi le gain de performance de désulfuration apparaissent différents.

Malgré une surface spécifique et/ou un volume poreux parfois plus faibles, les absorbants selon l'invention ont toujours une meilleure capacité de désulfuration que la chaux de seconde génération, dans le dispositif de la figure 2. Cette dernière possède pourtant déjà une capacité de désulfuration nettement meilleure que les chaux classiques ou de première génération.

En effet, il faut remarquer que les absorbants de l'exemple 1 permettent seulement d'atteindre des taux de désulfuration de 6% à 8%, dans les conditions opératoires de l'exemple 2 (220°C- SR=2,5).

### Exemple 3

Les performances d'abattement de HCl des six chaux éteintes de l'exemple 2 sont évaluées dans le dispositif de test de la figure 2, dans les conditions opératoires de l'exemple 2, sauf que la composition du gaz à épurer comprend 1200 mg/Nm³ de HCl, et pas de SO₂.

Les surfaces spécifiques BET et volumes poreux totaux BJH des six chaux de l'exemple 2 ainsi que leur performance d'abattement de HCl dans le dispositif de la figure 2 dans les conditions précitées sont repris au tableau 3.

**Tableau 3. Surface spécifique BET, volume poreux BJH et taux d'abattement de HCl**

| *Absorbant* | *Surface spécifique BET [m²*/*g]* | *Volume poreux BJH [cm³*/*g]* | *Taux d'abattement HCl* |
|---|---|---|---|
| Chaux 2^{de} génération selon WO97/14650 | 40 | 0,21 | 90% |
| Chaux selon l'invention additionnée de NaOH | 36 | 0,21 | 88% |
| Chaux selon l'invention additionnée de Na₂CO₃ | 38 | 0,20 | 88% |
| Chaux selon l'invention additionnée de Na₃PO₄ | 29 | 0,17 | 85% |
| Chaux selon l'invention additionnée de NaCOOH | 29 | 0,19 | 85% |
| Chaux selon l'invention additionnée de NaNO₃ | 30 | 0,17 | 85% |

Les résultats du tableau 3 montrent que les taux d'abattement de HCl ne sont pas ou peu affectés par le traitement selon l'invention, par rapport au produit de seconde génération de préférence.

### Exemple 4

Une composition pulvérulente de seconde génération, analogue à celle de l'exemple 2, et une composition pulvérulente selon l'invention, obtenue avec Na₂CO₃ comme additif, selon un mode de préparation similaire à celle de l'exemple 2, sont mises en oeuvre dans une installation industrielle émettant du SO₂.

Les principales caractéristiques du gaz à épurer sont les suivantes : débit de gaz : 22 000 Nm³/h, humidité du gaz ~15%, SO_{2 :} 5000 mg/Nm³ et température : 165°C.

La concentration finale de SO₂ à respecter est de 400 mg/Nm³, ce qui suppose un taux d'abattement de SO₂ de plus de 90%.

La composition selon l'invention permet d'atteindre l'objectif fixé de 90% d'abattement de SO₂ dans les conditions précitées, avec une réduction de consommation d'absorbant d'environ 16% par rapport à l'autre réactif, la chaux de seconde génération. Par ailleurs, l'utilisation d'une chaux hydratée classique au même dosage que la composition selon l'invention conduit à un taux d'abattement de SO₂ ne dépassant pas 40%.

### Exemple 5

Des composition pulvérulentes, analogues à celles réalisées selon l'invention, sont préparées, selon un mode de préparation similaire à celui de l'exemple 2 et au départ d'une chaux vive similaire, mais obtenue avec des additifs alcalino-terreux au lieu d'additifs à base de métal alcalin, ajoutés en quantité analogue (environ 7 g de métal alcalino-terreux par kg de composition finale). Trois compositions sont préparées, respectivement avec les additifs alcalino-terreux Mg(OH)₂, MgSO₄ et CaCl₂.

Les performances de désulfuration des trois chaux éteintes de l'exemple 5 sont évaluées de la même manière que dans l'exemple 2 et comparées, comme à l'exemple 2, aux performances de la chaux de seconde génération (selon WO97/14650).

Les surfaces spécifiques BET et volumes poreux totaux BJH des trois chaux de l'exemple 5 ainsi que leur performance d'abattement de SO₂ dans le dispositif de la figure 2 dans les conditions précitées sont repris au tableau 4. Ce dernier tableau reprend, à titre de comparaison, les caractéristiques et performances de la chaux de seconde génération.

**Tableau 4 : Surface spécifique BET, volume poreux BJH et taux d'abattement de SO₂ de chaux additionnées d'alcalino-terreux.**

| *Absorbant* | *Surface spécifique BET [m²*/*g]* | *Volume poreux BJH [cm³*/*g]* | *Taux d'abattement SO₂* |
|---|---|---|---|
| Chaux 2^{de} génération selon WO97/14650 | 40 | 0,21 | 20% |
| Chaux additionnée de Mg(OH)₂ | 36 | 0,20 | 18% |
| Chaux additionnée de MgSO₄ | 21 | 0,16 | 8% |
| Chaux additionnée de CaCl₂ | 12 | 0,09 | 6% |

Les résultats du tableau 4 montrent que la valeur de la surface spécifique et/ou du volume poreux des absorbants ne permettent pas à eux seuls de prédire la performance d'abattement de SO₂. En effet, avec des valeurs de ces deux paramètres mais surtout de volume poreux, largement plus élevés qu'une chaux classique et proches d'une chaux de seconde génération (dont le procédé de fabrication est analogue mais sans l'aditif), la chaux additionnée d'un additif alcalino-terreux présente un taux d'abattement de SO₂ qui est largement inférieur à une chaux de seconde génération et qui n'est pas meilleur qu'une chaux de première génération.

L'exemple 5 enseigne très clairement que contrairement à l'ajout d'un additif de métal alcalin selon l'invention, l'utilisation d'une quantité similaire d'additif alcalino-terreux n'apporte aucun gain de performance d'abattement de SO₂ par rapport à une chaux de seconde génération, voire même détériore complètement la chaux additionnée, au point d'avoir des taux d'abattement similaires à une chaux de première génération ou d'une chaux classique. L'expérience montre que cet effet néfaste de l'additif alcalino-terreux apparaît également en présente d'autres dosages de l'additif alcalino-terreux.

### Exemple 6

Des compositions pulvérulentes, analogues à celles réalisées selon l'invention, sont préparés selon un mode de préparation similaire à celle de l'exemple 2 et au départ d'une chaux vive similaire, mais obtenues avec des additifs de métal alcalin, ajoutés en quantité supérieure à celle recommandée dans l'invention, en l'occurrence, environ 50 g de métal alcalin par kg de composition finale. Deux compositions sont préparées, respectivement avec les additifs NaOH et Na₂CO₃.

Les performances de désulfuration des deux chaux éteintes de l'exemple 6 sont évaluées de la même manière que dans l'exemple 2 et comparées, comme à l'exemple 2, aux performances de la chaux de seconde génération (selon WO97/14650).

Les surfaces spécifiques BET et volumes poreux totaux BJH des deux chaux de l'exemple 6 ainsi que leur performance d'abattement de SO₂ dans le dispositif de la figure 2 dans les conditions précitées sont repris au tableau 5. Ce dernier tableau reprend, à titre de comparaison, les caractéristiques et -performances -de la -chaux de seconde génération.

**Tableau 5 : Surface spécifique BET, volume poreux BJH et taux d'abattement de SO₂ de chaux additionnées avec un excès d'additif**

| *Absorbant* | *Surface spécifique BET [m²*/*g]* | *Volume poreux BJH [cm³*/*g]* | *Taux d'abattement SO₂* |
|---|---|---|---|
| Chaux 2^{de} génération selon WO97/14650 | 40 | 0,21 | 20% |
| Chaux additionnée de NaOH en excès (50 g/kg) | 5 | 0,3 | 15% |
| Chaux additionnée de Na₂CO₃ en excès (50 g/kg) | 16 | 0,12 | 13% |

Les résultats du tableau 5 montrent une fois de plus que la valeur de la surface spécifique et/ou du volume poreux des absorbants ne permettent pas à eux seuls de prédire la performance d'abattement de SO₂. En effet, au vu de la valeurs de ces deux paramètres, la chaux additionnée de NaOH à 5% en poids devrait avoir un taux d'abattement de SO₂ largement inférieur à celui de la chaux additionnée de Na₂CO₃ à 5%.

Par ailleurs, le tableau 5 montre encore que la chaux additionnée d'un excès d'additif de métal alcalin présente des performances moins bonnes qu'une chaux de seconde génération.

On peut envisager d'utiliser la composition de chaux pulvérulente suivant l'invention pour l'épuration des gaz de fumées, après l'avoir mise en forme, par exemple par extrusion.

## Revendications

1. Composition de chaux pulvérulente comprenant des particules d'hydroxyde de calcium, qui présentent une surface spécifique BET égale ou supérieure à 25 m²/g et un volume poreux total BJH de désorption à l'azote égal ou supérieur à 0,1 cm³/g, **caractérisée en ce que** la composition comprend en outre une teneur en métal alcalin égale ou supérieure à 0,2 % et égale ou inférieure à 3,5 % sur la base du poids total de la composition.

2. Composition selon la revendication 1, dans laquelle la teneur en humidité résiduelle est égale ou inférieure à 3% en poids.

3. Composition selon l'une quelconque des revendications précédentes, **caractérisée en ce que** le métal alcalin provient d'un composé alcalin choisi dans le groupe constitué des hydroxydes, des carbonates, de hydrogénocarbonates, des nitrates, des phosphates, des persulfates, et des monocarboxylates de métal alcalin, et de leurs mélanges.

4. Composition selon l'une quelconque des revendications 1 à 3, **caractérisé en ce que** le métal alcalin est du sodium, du potassium et/ou du lithium.

5. Procédé de fabrication d'une composition de chaux pulvérulente selon l'une des revendications 1 à 4, comprenant:
- une extinction de particules de CaO de granulométrie égale
ou inférieure à 10 mm au moyen d'une quantité d'eau d'extinction suffisante pour obtenir un hydroxyde de calcium présentant une humidité résiduelle entre 15 et 35 % en poids, et
- un séchage dudit hydroxyde de calcium avec obtention
d'une composition de chaux pulvérulente,
**caractérisé en ce qu'**il comprend en outre, avant, pendant et/ou après l'extinction, une addition d'une quantité d'un composé alcalin aux particules de CaO, à l'eau d'extinction et/ou respectivement à l'hydroxyde de calcium, cette quantité étant suffisante pour d'obtenir, dans ladite composition de chaux pulvérulente, une teneur en métal alcalin égale ou supérieure à 0,2% et égale ou inférieure à 3,5 % en poids sur la base du poids total de la composition.

6. Procédé selon la revendication 5, dans lequel l'addition à l'eau d'extinction de ladite quantité de composé alcalin est préalable à ladite extinction.

7. Procédé selon la revendication 5, dans lequel ladite addition à l'eau d'extinction de ladite quantité de composé alcalin est simultanée à ladite extinction.

8. Procédé selon l'une quelconque des revendications 5 à 7, dans lequel le composé alcalin est choisi dans le groupe constitué des hydroxydes, des carbonates, des hydrogénocarbonates, des nitrates, des phosphates, des persulfates, et des monocarboxylates de métal alcalin, et de leurs mélanges.

9. Procédé selon lune quelconque des revendications 5 à 8, dans lequel le séchage a lieu au moyen d'un gaz présentant une température comprise entre 100 et 550°C, avec un abaissement de l'humidité résiduelle à une valeur égale ou inférieure à 3% en poids.

10. Procédé selon l'une quelconque des revendications 5 à 9, comprenant en outre, après extinction, un broyage d'au moins une partie dudit hydroxyde de calcium.

11. Procédé selon la revendication 10, dans lequel le broyage a lieu après séchage et/ou au cours de celui-ci.

12. Procédé de fabrication d'une composition de chaux pulvérulente selon l'une des revendications 1 à 4, comprenant:
- un mélange de CaO et/ou Ca(OH)₂ avec une quantité d'eau suffisante pour obtenir un lait de chaux présentant une teneur en matière solide de 10 à 50% en poids,
- une séparation d'eau à partir dudit lait de chaux,
- un séchage dudit lait de chaux ainsi séparé d'eau, avec obtention d'une composition de chaux pulvérulente, **caractérisé en ce qu'**il comprend en outre, une addition avant, pendant ou après le mélange, une quantité d'un composé alcalin au CaO et/ou Ca(OH)₂, à l'eau de mélange et/ou respectivement au lait de chaux, cette quantité étant suffisante pour obtenir, dans ladite composition de chaux pulvérulente, une teneur en métal alcalin égale ou supérieure à 0,2% et égale ou inférieure à 3,5 % en poids sur la base du poids total de la composition.

13. Utilisation d'une composition de chaux pulvérulente selon l'une quelconque des revendications 1 à 4, pour une épuration des gaz de fumées.

14. Utilisation selon la revendication 13, pour un abattement des composés soufrés et halogénés présents dans lesdits gaz de fumées.

15. Utilisation suivant l'une ou l'autre des revendications 13 et 14, comprenant une mise en forme de ladite composition de chaux pulvérulente pour ladite épuration des gaz de fumées.

## Claims

1. A powdery lime composition comprising particles of calcium hydroxide, which have a specific surface area BET equal to or greater than 25 m²/g and a total porous BJH volume from nitrogen desorption equal to or greater than 0.1 cm³/g, **characterized in that** the composition further comprises an alkaline metal content equal or greater than 0.2% and equal to or less than 3.5% on the basis of the total weight of the composition.

2. The composition according to claim 1, wherein the residual moisture content is equal to or less than 3% by weight.

3. The composition according to any of the preceding claims, **characterized in that** the alkaline metal derives from an alkaline compound selected from the group consisting of alkaline metal hydroxides, carbonates, hydrogencarbonates, nitrates, phosphates, persulfates, and monocarboxylates and mixtures thereof.

4. The composition according to any of claims 1 to 3, **characterized in that** the alkaline metal is sodium, potassium and/or lithium.

5. A method for making a powdery lime composition according to any of claims 1 to 4, comprising:
- slaking of CaO particles with a grain size equal to or less than 10 mm by means of a sufficient amount of slaking water in order to obtain calcium hydroxide having a residual moisture comprised between 15 and 35% by weight, and
- drying of said calcium hydroxide with the obtaining of a powdery lime composition,
**characterized in that** it further comprises, before, during and/or after slaking, addition of an amount of an alkaline compound to CaO particles, to the slaking water and/or respectively to the calcium hydroxide, this amount being sufficient for obtaining in said powdery lime composition, an alkaline metal content equal to or greater than 0.2% and equal to or less than 3.5% by weight on the basis of the total weight of the composition.

6. The method according to claim 5, wherein the addition of said alkaline compound amount to the slaking water is prior to said slaking.

7. The method according to claim 5, wherein said addition of said alkaline compound to the slaking water amount is simultaneous with said slaking.

8. The method according to any of claims 5 to 7, wherein the alkaline compound is selected from the group consisting of alkaline metal hydroxides, carbonates, hydrogencarbonates, nitrates, phosphates, persulfates and monocarboxylates and mixtures thereof.

9. The method according to any of claims 5 to 8, wherein the drying occurs by means of a gas having a temperature between 100 and 550°C, with lowering of the residual moisture to a value equal to or less than 3% by weight.

10. The method according to any of claims 5 to 9, further comprising, after slaking, milling of at least one portion of said calcium hydroxide.

11. The method according to claim 10, wherein the milling occurs after drying and/or during the latter.

12. A method for making a powdery lime composition according to any of claims 1 to 4, comprising:
- mixing CaO and/or Ca(OH)₂ with a sufficient amount of water in order to obtain lime milk having a solid material content from 10 to 50% by weight,
- separating water from said lime milk,
- drying said lime mild thus separated from water, with the obtaining of a powdery lime composition, **characterized in that** if further comprises addition before, during or after the mixing, of an amount of an alkaline compound to CaO and/or Ca(OH)₂, to the mixing water and/or respectively to the lime milk, this amount being sufficient for obtaining, in said powdery lime composition, an alkaline metal content equal to or greater than 0.2% and equal to or less than 3.5% by weight on the basis of the total weight of the composition.

13. The use of a powdery lime composition according to any of claims 1 to 4, for purifying fume gases.

14. The use according to claim 13, for reducing sulfur-containing and halogenated compounds present in said fume gases.

15. The use according to either one of claims 13 and 14, comprising shaping of said powdery lime composition for said purification of fume gases.

## Patentansprüche

1. Pulverförmige Kalkzusammensetzung, die Calciumhydroxidpartikel umfasst, die eine spezifische Oberfläche (BET) gleich oder größer 25 m²/g und ein Gesamtporenvolumen BJH aus Stickstoffdesorption aufweisen, das gleich oder größer 0,1 cm³/g ist, **dadurch gekennzeichnet, dass** die Zusammensetzung ferner einen Alkalimetallgehalt gleich oder kleiner 3,5 % auf der Basis des Gesamtgewichts der Zusammensetzung umfasst.

2. Zusammensetzung nach Anspruch 1, wobei der Restfeuchtegehalt gleich oder kleiner 3 Gew.-% ist.

3. Zusammensetzung nach einem der vorhergehenden Ansprüche, **dadurch gekennzeichnet, dass** das Alkalimetall aus einer alkalischen Verbindung stammt, ausgewählt aus der Gruppe bestehend aus Alkalimetallhydroxiden, -carbonaten, -hydrogencarbonaten, - nitraten, -phosphaten, -persulfaten und -monocarboxylaten und deren Gemischen.

4. Zusammensetzung nach einem der vorhergehenden Ansprüche 1 bis 3, **dadurch gekennzeichnet, dass** das Alkalimetall Natrium, Kalium und/oder Lithium ist.

5. Verfahren zur Herstellung einer pulverförmigen Kalkzusammensetzung nach einem der Ansprüche 1 bis 4, umfassend:
- Ablöschen der CaO-Partikel mit einer Partikelgröße gleich oder kleiner 10 mm mittels einer Menge an Ablöschwasser, die ausreichend ist, um ein Calciumhydroxid zu erhalten, das eine Restfeuchte zwischen 15 und 35 Gew.-% aufweist, und
- Trocknen des Calciumhydroxids, um eine pulverförmige Kalkzusammensetzung zu erhalten,
**dadurch gekennzeichnet, dass** es ferner, vor, während und/oder nach dem Ablöschen eine Zugabe einer Menge einer alkalischen Verbindung zu den CaO-Partikeln zum Ablöschwasser bzw. und/oder zum Calciumhydroxid umfasst, wobei diese Menge aufreichend ist, um in der pulverförmigen Kalkzusammensetzung einen Alkalimetallgehalt gleich oder größer 0,2 Gew.-% und gleich oder kleiner 3,5 Gew.-%, auf der Basis des Gesamtgewichts der Zusammensetzung, zu erhalten.

6. Verfahren nach Anspruch 5, wobei die Zugabe der Menge einer alkalischen Verbindung zum Ablöschwasser vor dem Ablöschen stattfindet.

7. Verfahren nach Anspruch 5, wobei die Zugabe der Menge einer alkalischen Verbindung zum Ablöschwasser gleichzeitig mit dem Ablöschen stattfindet.

8. Verfahren nach einem der vorhergehenden Ansprüche 5 bis 7, wobei die alkalische Verbindung ausgewählt ist aus der Gruppe bestehend aus Alkalimetallhydroxiden, -carbonaten, -hydrogencarbonaten, -nitraten, -phosphaten, -persulfaten und -monocarboxylaten und deren Gemischen.

9. Verfahren nach einem der Ansprüche 5 bis 8, wobei das Trocknen mittels eines Gases stattfindet, das eine Temperatur im Bereich zwischen 100 und 550°C aufweist, um eine Verringerung der Restfeuchte auf einen Wert gleich oder kleiner 3 Gew.-% zu erreichen.

10. Verfahren nach einem der Ansprüche 5 bis 9, das ferner nach dem Ablöschen ein Mahlen mindestens eines Teils des Calciumhydroxids umfasst.

11. Verfahren nach Anspruch 10, wobei das Mahlen nach dem Trocknen und/oder während des Trocknens stattfindet.

12. Verfahren zur Herstellung einer pulverförmigen Kalkzusammensetzung nach einem der Ansprüche 1 bis 4, umfassend:
- Mischen von CaO und/oder Ca(OH)₂ mit einer Wassermenge, die ausreichend ist, um eine Kalkmilch zu erhalten, die einen Feststoffgehalt von 10 bis 50 Gew.-% aufweist,
- Abtrennen des Wassers von der Kalkmilch,
- Trocknen der so vom Wasser getrennten Kalkmilch, so dass eine pulverförmige Kalkzusammensetzung erhalten wird, **dadurch gekennzeichnet, dass** es ferner umfasst,
- Zugeben vor, während oder nach dem Mischen, einer Menge einer alkalischen CaO- und/oder Ca(OH)₂-Verbindung zum Mischwasser bzw. und/oder zur Kalkmilch, wobei diese Menge ausreichend ist, um in der pulverförmigen Kalkzusammensetzung einen Alkalimetallgehalt gleich oder größer 0,2 Gew.-% und gleich oder kleiner 3,5 Gew.-%, auf der Basis des Gesamtgewichts der Zusammensetzung, zu erhalten.

13. Verwendung einer pulverförmigen Kalkzusammensetzung nach einem der Ansprüche 1 bis 4 zur Reinigung von Rauchgasen.

14. Verwendung nach Anspruch 13 zum Reduzieren der schwefelhaltigen und halogenierten Verbindungen, die in den Rauchgasen vorhanden sind.

15. Verwendung nach irgendeinem der Ansprüche 13 und 14, die die Formgebung der pulverförmigen Kalkzusammensetzung für die Reinigung der Rauchgase umfasst.
